# EUROPEAN PATENT SPECIFICATION

(11) **EP 0 414 276 B1**
(45) Date of publication and mention of the grant of the patent: **06.03.1996**
(21) Application number: 90116295.8
(22) Date of filing: 24.08.1990
(51) Int. Cl.: H04N 5/225, H04N 5/238, H04N 5/232

(54) **Video camera control system**
Videokamerasteuersystem
Système de contrôle de caméra vidéo

(30) Priority: 25.08.1989 JP 218782/89
(43) Date of publication of application: 27.02.1991
(73) Proprietor: MATSUSHITA ELECTRIC INDUSTRIAL CO., LTD., Kadoma-shi, Osaka-fu, 571 (JP)
(72) Inventor: Soma, Satoshi, Kohoku-ku, Yokohama-shi (JP); Hayashi, Toshihiko, Izumi-ku, Yokohama-shi (JP); Ota, Kazuo, Sagamihara-shi (JP)
(74) Representative: Patentanwälte Leinweber & Zimmermann

(56) References cited:
- EP-A- 0 067 504
- PATENT ABSTRACTS OF JAPAN vol. 6, no. 245 (P-159) 03 December 1982, & JP-A- 57 141732 (YOKOGAWA DENKI SEISAKUSHO) 02 September 1982,

## Description

### BACKGROUND OF THE INVENTION

This invention relates to a video camera control system for operating an iris of a lens of a monitor camera or the like from a remote place as known from EP-A-0 067 504.

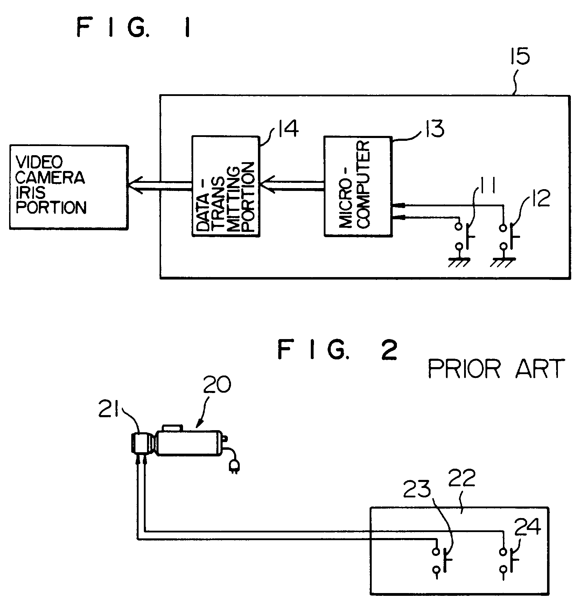

Another conventional video camera control unit of this type as shown in Fig. 2 comprises a video camera 20, an iris drive portion 21, a camera control unit 22, an iris-opening switch 23, and an iris-closing switch 24.

In this conventional control unit, the iris is designed only to be opened and closed, and besides contacts of the iris-opening and closing switches are connected directly to the side of the camera. Thus, one switch per one function is required.

EP-A-0 067 504 discloses a video camera control system according to the precharacterizing clause of Claim 1. In said system, a first switch 14 serves for triggering the closing of an iris portion of a lens of a video camera, whereas a second switch 11 serves for switching between an "AUTO" and a "MANUAL" control mode.

JP-A-57 141 732 discloses a starting operation method for a simple-type auxiliary storage device. Said device includes a first switch for triggering the read-out of the storage device and a second switch for triggering the write-in of the storage device. In case that both switches are operated simultaneously, a check program is started.

It is an object of the present invention to improve the video camera control system known from EP 0 067 504 A1 so that it is of a small size, is multi-functional and is excellent in operability.

According to the invention, the above object is achieved by a video camera control system comprising: a first switch for triggering the closing of an iris portion of a lens of a video camera, and a second switch, characterized in that said second switch serves for triggering the opening of said iris portion, and control means are provided for triggering the returning of said iris portion to a standard condition, wherein said control means are adapted to judge the states of said first and second switches to produce an iris control signal in accordance with the judged states of said first and second switches, said control means outputting a control signal for returning said iris portion to said standard condition when said control means judges that said first and second switches are pressed simultaneously.

A preferred embodiment is claimed in Claim 2.

With the video camera control system according to the invention, there is provided a further function, namely the function of (automatically) returning the iris to the standard condition, which function is not provided in the system according to EP-A-0 067 504.

With the above construction, when it is judged that the two switches for respectively opening and closing the iris portion are pressed simultaneously, the control signal for returning the iris portion to the standard condition is outputted, thereby returning the iris portion to the standard condition. Thus, there is no need to provide an additional switch for effecting the above returning operation, so that the area of an operativy panel is not increased, resulting in a small size.

### BRIEF DESCRIPTION OF THE DRAWINGS

Fig. 1 is a block diagram of a preferred embodiment of a video camera control system of the present invention; and
Fig. 2 is a block diagram of a conventional video camera control system.

### DESCRIPTION OF THE PREFERRED EMBODIMENT OF THE INVENTION

Fig. 1 shows one preferred embodiment of the present invention.

Referring to Fig. 1, an iris-opening switch 11 and an iris-closing switch 12 are both connected to a microcomputer 13. A transmitting portion 14 receives, from the microcomputer 13, control data for a video camera and etc., and transmits these data to the video camera.

The operation of the above embodiment will now be described. When the iris-opening switch 11 and the iris-closing switch 12 are pressed simultaneously, the outputs of the two switches 11 and 12 are inputted into the microcomputer 13. In order to determine whether or not such simultaneous pressing is intentional, the microcomputer 13 checks whether or not the simultaneous pressing condition continues for a predetermined period of time. If this simultaneous pressing condition continues for the predetermined time period, the microcomputer 13 judges that the simultaneous pressing has been effected intentionally. That is, whichever the first or second switch is pressed earlier, the iris portion can be returned to the standard condition thereof by the simultaneous pressing. Then, the control data for returning the iris portion to a standard condition are fed from the microcomputer 13 to the video camera via the transmitting portion 14.

In this manner, in the above embodiment, by simultaneously pressing the two switches (i.e., the opening switch 11 and the closing switch 12) similar to those used in a conventional control system, a new function of returning the iris portion to the standard condition can be performed. Thus, there is no need to use an additional switch for such new function. Further, since the microcomputer is employed to judge the condition of inputting of the switches, the control system will not respond to an accidental simultaneous pressing of the switches, and only when the switches are simultaneously pressed intentionally, the system will respond, thus providing an excellent operability.

## Claims

1. A video camera control system comprising:
a first switch (12) for triggering the closing of an iris portion of a lens of a video camera (20), and
a second switch (11),
characterized in that
said second switch (11) serves for triggering the opening of said iris portion, and
control means (13) are provided for triggering the returning of said iris portion to a standard condition,
wherein said control means (13) are adapted to judge the states of said first and second switches (11, 12) to produce an iris control signal in accordance with the judged states of said first and second switches (11, 12), said control means (13) outputting a control signal for returning said iris portion to said standard condition when said control means (13) judges that said first and second switches (11, 12) are pressed simultaneously.

2. A video camera control system according to claim 1, in which said control means (13) outputs said control signal for returning said iris portion to the standard condition when said control means (13) judges that said first and second switches (11, 12) are simultaneously pressed for a predetermined period of time.

## Patentansprüche

1. Videokamerasteuerungssystem, mit:
einem ersten Schalter (12) zum Auslösen des Schließens eines Irisblendenabschnitts einer Linse einer Videokamera (20), und
einem zweiten Schalter (11),
dadurch gekennzeichnet, daß
der zweite Schalter (11) zum Auslösen des Öffnens des Irisblendenabschnitts dient, und
eine Steuerungseinrichtung (13) zum Auslösen des Zurückbringens des Irisblendenabschnitts in einen Standardzustand vorgesehen ist,
wobei die Steuerungseinrichtung (13) dazu ausgelegt ist, den Zustand des ersten und den des zweiten Schalters (11, 12) festzustellen, um ein Irisblendensteuerungssignal entsprechend den festgestellten Zuständen des ersten und des zweiten Schalters (11, 12) zu erzeugen, wobei die Steuerungseinrichtung (13) ein Steuerungssignal zum Zurückbringen des Irisblendenabschnitts in den Standardzustand ausgibt, wenn die Steuerungseinrichtung (13) feststellt, daß der erste und der zweite Schalter (11, 12) gleichzeitig gedrückt werden.

2. Videokamerasteuerungssystem nach Anspruch 1, bei dem die Steuerungseinrichtung (13) das Steuerungssignal zum Zurückbringen des Irisblendenabschnitts in den Standardzustand ausgibt, wenn die Steuerungseinrichtung (13) feststellt, daß der erste und der zweite Schalter (11, 12) für eine vorbestimmte Zeitspanne gleichzeitig gedrückt werden.

## Revendications

1. Système de commande de caméra vidéo, comprenant
un premier interrupteur (12) pour déclencher la fermeture d'une partie iris d'un objectif d'une caméra vidéo (20) et
un second interrupteur (11),
caractérisé en ce que
ledit second interrupteur (11) sert à déclencher l'ouverture de ladite partie iris, et
un moyen de commande (13) est prévu pour déclencher le retour de ladite partie iris dans une situation normale,
ledit moyen de commande (13) étant agencé de manière à juger les états desdits premier et second interrupteurs (11,12) afin de produire un signal de commande d'iris selon les états jugés desdits premier et second interrupteurs (11,12), ledit moyen de commande (13) délivrant un signal de commande pour ramener ladite partie iris dans ladite situation normale lorsque ledit moyen de commande (13) juge que lesdits premier et second interrupteurs (11,12) sont pressés simultanément.

2. Système de commande de caméra vidéo selon la revendication 1, dans lequel ledit moyen de commande (13) délivre ledit signal de commande pour ramener ladite partie iris dans la situation normale lorsque ledit moyen de commande juge que lesdits premier et second interrupteurs (11,12) sont pressés simultanément pendant une période de temps prédéterminée.
